Europäisches Patentamt

European Patent Office

Office européen des brevets

(19)

(11) Numéro de publication : **0 124 937
B1**

(12)

# FASCICULE DE BREVET EUROPÉEN

(45) Date de publication du fascicule du brevet :
21.01.87

(21) Numéro de dépôt : 84200618.1

(22) Date de dépôt : 04.03.82

(60) Numéro de publication de la demande initiale en application de l'article 76 CBE : 0060592

(51) Int. Cl.⁴ : **A 46 B 17/06**, A 46 B 3/06, A 46 B 9/04, A 46 B 3/04

(54) **Brosse et procédé pour son obtention.**

(30) Priorité : 18.03.81 LU 83225

(43) Date de publication de la demande :
14.11.84 Bulletin 84/46

(45) Mention de la délivrance du brevet :
21.01.87 Bulletin 87/04

(84) Etats contractants désignés :
AT BE CH DE FR GB IT LI NL SE

(56) Documents cités :
FR-A- 550 724
FR-A- 794 580
GB-A- 141 640
GB-A- 2 016 269
US-A- 1 707 118
US-A- 2 587 792
US-A- 2 664 316
US-A- 2 876 477
US-A- 4 166 304

(73) Titulaire : d'Argembeau, Etienne Yves G. J.
24 Rue de Belle-Vue
B-1050 Bruxelles (BE)

(72) Inventeur : d'Argembeau, Etienne Yves G. J.
24 Rue de Belle-Vue
B-1050 Bruxelles (BE)

(74) Mandataire : De Brabanter, Maurice et al
Bureau VANDER HAEGHEN 63 Avenue de la Toison d'Or
B-1060 Bruxelles (BE)

EP 0 124 937 B1

Jouve, 18, rue St-Denis, 75001 Paris, France

## Description

La présente invention est relative à une brosse à dents comportant un manche et une tête garnie d'une multiplicité de poils monofilamentaires sensiblement tangents l'un à l'autre et faisant saillie par rapport à un côté de la tête, de manière à former entre eux une multiplicité de canaux capillaires ouverts, d'une part, à l'extrémité libre des poils et, d'autre part, du côté de la tête opposé à celui par rapport auquel les poils font saillie, les poils traversant une fenêtre ménagée dans la tête.

On connaît par le document GB-A-2016269 une ébauche de brosse à dents présentant les particularités indiquées ci-avant. Selon ce document, on moule une tête de brosse à dents en injectant une matière thermoplastique ou thermodurcissable liquide ou pâteuse dans un moule dans lequel des monofilaments sont serrés l'un contre l'autre grâce à des saillies circulaires internes de ce moule. Le document en question ne révèle pas de moyens de solidarisation des monofilaments entre eux dans la tête moulée.

La présente invention vise à assurer que les poils monofilamentaires sensiblement tangents l'un à l'autre forment un ensemble solidaire de la tête de la brosse, sans que les canaux capillaires précités soient obstrués ou sensiblement déformés dans la tête de la brosse, ce qui empêche toute accumulation de particules, telles que des particules provenant de la plaque bactérienne recouvrant les dents et détachées de celles-ci lors de chaque brossage.

La brosse à dents du type décrit dans le premier paragraphe du présent mémoire est caractérisée en ce que, au ras du côté de la tête, opposé à celui par rapport auquel les poils monofilamentaires font saillie, ces poils sont soudés l'un à l'autre à leurs points de tangence mutuels, tandis que les poils adjacents à la paroi interne de la fenêtre sont, en outre, soudés à leurs points de tangence avec cette paroi interne de la fenêtre.

La présente invention concerne aussi un procédé de fabrication d'une brosse à dents du type décrit ci-avant. Selon ce procédé, on engage une multiplicité de monofilaments en matière organique synthétique thermoplastique dans une fenêtre ménagée dans une tête préformée de la brosse de façon que les monofilaments soient sensiblement tangents l'un à l'autre sur toute leur longueur et fassent saillie sur une distance désirée par rapport à un premier côté de la tête, on coupe les monofilaments au ras du côté opposé audit premier côté de la tête et on soude à l'aide d'un dispositif émettant des rayons laser les monofilaments entre eux ainsi qu'audit côté opposé de la tête, en faisant en sorte que des canaux capillaires ouverts à leurs deux extrémités soient ménagés entre les monofilaments.

La solidarisation par soudage des monofilaments à leurs points de tangence et à leurs points de contact avec la matière constitutive de la tête, au bord du trou ménagé dans celle-ci, peut s'effectuer, en disposant la source de rayons laser au-dessus de la face dorsale (c'est-à-dire la face opposée à celle où les monofilaments font saillie) de la tête en regard du trou garni de monofilaments et en assurant un déplacement relatif entre cette source et la tête, la distance entre la source et la tête, la puissance de la source précitée et la vitesse de mouvement relatif entre la tête et la source étant réglées de façon à assurer ladite solidarisation, sans obstruer les canaux capillaires précités, éventuellement grâce à la présence d'un fluide, tel que de l'eau, dans les canaux capillaires pendant le soudage.

Les dessins ci-annexés, illustrent l'invention.

Dans ces dessins :

la figure 1 est une vue en élévation latérale d'une brosse en cours de fabrication ;

la figure 2 est, à plus grande échelle, une coupe partielle suivant les lignes II-II de la figure 1 ;

la figure 3 est une vue en perspective schématique illustrant le soudage des filaments l'un à l'autre et à la tête de la brosse.

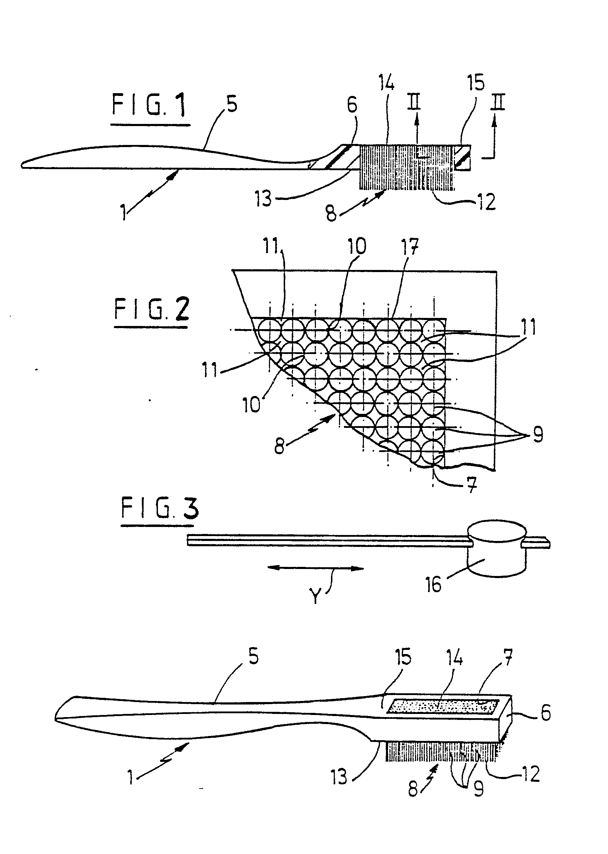

Les figures 1 et 2 montrent une brosse à dents 1 suivant l'invention, cette brosse comportant un manche 5 et une tête 6. Dans cette tête 6 est ménagé un trou allongé 7 dont la longueur et la largeur correspondent à celles de l'ensemble des poils 8. Ces poils sont constitués d'une multitude de monofilaments fins 9 en matière organique synthétique thermoplastique qui s'étendent parallèlement l'un à l'autre et forment entre leurs points de tangence 10 des canaux capillaires 11 ouverts à l'extrémité libre 12 des filaments 9 du côté de la face frontale 13 de la tête 6, ainsi qu'à leur extrémité opposée 14 au ras de la face dorsale 15 de cette tête. Comme on le voit à la figure 2, les filaments 9 sont disposés en rangées de filaments dont les axes sont situés sur des lignes parallèles tant longitudinalement que transversalement. Ces filaments 9 peuvent cependant être disposés en quinconce. Dans une forme de réalisation particulière de l'invention, la brosse à dents comporte environ 1 250 monofilaments 9 de nylon d'un diamètre de 0,2 millimètre traversant de part en part le trou 7 qui a une longueur de 1 centimètre et une largeur de 0,5 centimètre.

La figure 3 montre, en perspective schématique, un dispositif émetteur de rayons laser 16 mobile dans le sens des flèches Y parallèlement à une brosse du type décrit en référence aux figures 1 et 2, ce dispositif émetteur de rayons laser 16 étant monté à une distance prédéterminée de la brosse. Par déplacement du dispositif 16 et/ou de la brosse dans le sens des flèches Y, les rayons laser émis par le dispositif 16, dont la puissance a été réglée à une valeur adéquate, assurent le soudage thermique des filaments à leurs points de contact tangentiel 10 et à leurs points de contact 17 (voir figure 2) avec la paroi interne du trou 7, sans provoquer d'obturation des canaux capillaires 11 à leur extrémité 14.

**Revendications**

1. Brosse à dents comportant un manche (1) et une tête (6) garnie d'une multiplicité de poils monofilamentaires (9) sensiblement tangents l'un à l'autre et faisant saillie par rapport à un côté (13) de la tête (6), de manière à former entre eux une multiplicité de canaux capillaires (11) ouverts, d'une part, à l'extrémité libre (12) des poils (9) et, d'autre part, du côté (15) de la tête (6) opposé à celui (13) par rapport auquel les poils (9) font saillie, les poils traversant une fenêtre (7) ménagée dans la tête (6), caractérisée en ce que, au ras du côté (15) de la tête (6), les poils (9) sont soudés l'un à l'autre à leurs points de tangence mutuels (10), tandis que les poils adjacents à la paroi interne de la fenêtre (7) sont, en outre, soudés à leurs points de tangence (17) avec cette paroi interne de la fenêtre (7).

2. Procédé de fabrication d'une brosse à dents suivant la revendication 1, caractérisé en ce qu'on engage une multiplicité de monofilaments (9) en matière organique synthétique thermoplastique dans une fenêtre (7) ménagée dans une tête (6) préformée de la brosse (1) de façon que les monofilaments soient sensiblement tangents l'un à l'autre sur toute leur longueur et fassent saillie sur une distance désirée par rapport à un côté (13) de la tête (6), on coupe les monofilaments au ras du côté (15) opposé au côté (13) de la tête (6) et on soude à l'aide d'un dispositif émettant des rayons laser (16) les monofilaments entre eux ainsi qu'au côté (15) de la tête (6), en faisant en sorte que des canaux capillaires (11) ouverts à leurs deux extrémités soient ménagés entre les monofilaments (9).

**Claims**

1. Tooth-brush comprising a handle (1) and a head (6) provided with a multiplicity of monofilamentary bristles (9) which are substantially tangent to each other and protruded from one face (13) of the head (6), so as to form between them a multiplicity of capillary channels (11) which are open, on the one hand, at the free end (12) of the filaments (9) and, on the other hand, on the face (15) of the head (6) opposite to the face (13) from which the filaments (9) protrude, the filaments passing through a hole (7) provided in the head (6), characterized in that, flush to the face (15) of the head (6), the filaments (9) are welded to each other at their mutual tangent points (10), whereas the filaments adjacent to the inner wall of the hole (7) are furthermore welded at their tangent point (17) with said inner wall of the hole (7).

2. Process for manufacturing a tooth-brush according to claim 1, characterized in that a multiplicity of monofilaments (9) made of an organic thermoplastic synthetic material are engaged into a hole (7) provided in a preformed head (6) of the brush (1), so that the monofilaments are tangent to each other all along their length and protrude the desired distance from one face (13) of the head (6), the monofilaments are severed flush with the face (15) opposite the face (13) of the head (6) and the monofilaments are welded to each other and to said opposite face (15) of the head (6) by means of a source (16) of laser beams, so that capillary channels (11) are formed between the monofilaments (9), said channels being open at both ends.

**Patentansprüche**

1. Zahnbürste, umfassend einen Stiel (1) und einen Kopf (6), der mit einer Mehrzahl von monofilen Borsten (9) versehen ist, die einander im wesentlichen berühren und in bezug auf eine Seite (13) des Kopfes (6) derart vorstehen, daß sie zwischen ihnen eine Mehrzahl von offenen Kapillarkanälen (11) einerseits am freien Ende (12) der Borsten (9) und anderseits an der Seite (15) des Kopfes (6), die jener (13), in bezug auf welche die Borsten (9) vorstehen, gegenüberliegt, bilden, wobei die Borsten ein im Kopf (6) vorgesehenes Fenster (7) durchsetzen, dadurch gekennzeichnet, daß die Borsten (9) in gleicher Höhe mit der Seite (15) des Kopfes (6) an ihren gegenseitigen Berührungspunkten (10) zusammengeschweißt sind, wobei die an der Innenwand des Fensters (7) anliegenden Borsten weiters an ihrem Berührungspunkt (17) mit dieser Innenwand des Fensters (7) verschweißt sind.

2. Verfahren zur Herstellung einer Zahnbürste nach Anspruch 1, dadurch gekennzeichnet, daß man eine Mehrzahl von Monofilamenten (9) aus thermoplastischem, synthetischem organischen Material in ein in einem vorgeformten Kopf (6) der Bürste (1) vorgesehenes Fenster (7) derart einsetzt, daß die Monofilamente über ihre gesamte Länge im wesentlichen einander berühren und über eine gewünschte Distanz in bezug auf eine Seite (13) des Kopfes (6) vorstehen, man die Monofilamente in gleicher Höhe mit der der Seite (13) des Kopfes (6) gegenüberliegenden Seite (15) abschneidet und man mit Hilfe einer Laserstrahlen emittierenden Einrichtung (16) die Monofilamente miteinander sowie an der Seite (15) des Kopfes (6) derart verschweißt, daß an beiden Enden offene Kapillarkanäle (11) zwischen den Monofilamenten (9) entstehen.

FIG. 1

FIG. 2

FIG. 3